# EUROPÄISCHE PATENTANMELDUNG

(11) **EP 4 775 809 A1**
(43) Veröffentlichungstag der Anmeldung: **15.07.2026**
(21) Anmeldenummer: 25151304.0
(22) Anmeldetag: 10.01.2025
(51) Int. Cl.: F02B 37/10, F02B 39/10, F04D 25/06, H02K 1/20, H02K 5/12, H02K 5/128, H02K 5/14, H02K 9/04

(54) **MEDIENSPALTMOTOR, BEISPIELSWEISE FÜR EINEN TURBOLADER, UND VERBRENNUNGSMOTOR**

(71) Anmelder: G+L Innotec GmbH, 88471 Laupheim (DE)
(72) Erfinder: HEBER, Ralf, 89155 Ersingen (DE); GÖDEKE, Holger, 88480 Achstetten-Stetten (DE)
(74) Vertreter: Pfenning, Meinig & Partner mbB

(57) **Zusammenfassung**

Die Anmeldung betrifft einen Medienspaltmotor, beispielsweise für einen Turbolader (1), und einen Verbrennungsmotor. Der vorgeschlagene Medienspaltmotor weist eine Welle (10) auf, in oder auf der ein Rotormagnet (12) aufgenommen ist. Der Medienspaltmotor weist außerdem einen Stator (9) mit Statorwicklungen (22, 22') zum elektrischen Antreiben einer Drehung der Welle (10) auf. Darüber hinaus weist der Medienspaltmotor ein Gehäuse auf, das einen zwischen dem Rotor (7) und dem Stator (9) angeordneten Strömungsraum (11) begrenzt. Der Medienspaltmotor weist außerdem ein in dem Strömungsraum (11) und auf der Welle (10) angeordnetes Verdichterrad (6) auf. Außerdem sind in dem Gehäuse Strömungskanäle (13, 13') zum Führen eines Teilmassestroms eines Mediums vorgesehen. Die Rückströmkanäle (13, 13') weisen jeweils einen Einlass (14, 14') vom Strömungsraum (11) und einen Auslass (15, 15') zum Strömungsraum (11) auf. Außerdem sind die Rückströmkanäle (13, 13') an den Statorwicklungen (22, 22') vorbeigeführt.

## Beschreibung

Die Anmeldung betrifft einen Medienspaltmotor, beispielsweise für einen Turbolader, nach dem Oberbegriff des Anspruch 1 und einen Verbrennungsmotor.

Aus dem Stand der Technik Verbrennungskraftmaschinen mit Turboladern bekannt. In der Regel wird hierbei ein Abgasstrom genutzt, um ein Turbinenrad anzutreiben. Das Turbinenrad ist beispielsweise über eine Welle mit einem Verdichterrad gekoppelt, das eine Verdichtung von einem Brennraum zuzuführender Frischluft sicherstellt. Eine solche Vorverdichtung bzw. Aufladung führt zu einer erhöhten Motorleistung bzw. erhöhtem Drehmoment gegenüber herkömmlichen Verbrennungskraftmaschinen. Allerdings besteht bei derartig aufgeladenen Verbrennungskraftmaschinen das Problem des sogenannten Turbolochs, das insbesondere beim Anfahren und Beschleunigen aus niedrigen Drehzahlen eines Fahrzeugs, also wenn die Verbrennungskraftmaschine rasch in Bereiche höherer Leistung beschleunigt werden soll, auftritt. Dies rührt daher, dass der erhöhte Luftmengenbedarf auf der Luftzuführseite nur mit einer Verzögerung bereitgestellt werden kann (unter anderem bedingt durch die Trägheit des Systems Turbinenrad-Verdichterrad).

Zur Verringerung der Verzögerung und zum Zuführen einer richtigen Menge Frischluft kann es vorgesehen sein, dass der Turbolader einen Elektromotor mit Stator und Rotor aufweist. Stand der Technik verwandter Art ist beispielsweise in der Druckschrift WO 2008 141 670 A1 beschrieben.

Vor diesem Hintergrund ist es eine Aufgabe der vorliegenden Anmeldung einen verbesserten Medienspaltmotor, beispielsweise für einen Turbolader, vorzuschlagen. Insbesondere ist es eine Aufgabe der vorliegenden Anmeldung, einen Medienspaltmotor vorzuschlagen, der kompakt, effizient, stabil und langlebig ist und sich durch ein vorteilhaftes Wärmemanagement auszeichnet. Darüber hinaus ist es eine Aufgabe der vorliegenden Anmeldung einen entsprechend vorteilhaften Verbrennungsmotor vorzuschlagen.

Diese Aufgaben werden gelöst durch einen Medienspaltmotor mit den Merkmalen des Anspruchs 1 sowie durch einen Verbrennungsmotor mit den Merkmalen eines weiteren Anspruchs. Vorteilhafte Weiterbildungen ergeben sich mit den Merkmalen der abhängigen Ansprüche und der Ausführungsbeispiele.

Dar vorgeschlagene Medienspaltmotor, beispielsweise für einen Turbolader, weist eine Welle auf, in oder auf der ein Rotormagnet aufgenommen ist. Der Medienspaltmotor weist außerdem einen Stator mit Statorwicklungen zum elektrischen Antreiben einer Drehung der Welle auf. Darüber hinaus weist der Medienspaltmotor ein Gehäuse auf, das einen zwischen dem Rotor und dem Stator angeordneten Strömungsraum begrenzt. Das Gehäuse kann ein Verdichtergehäuse sein. In der Regel dient der Strömungsraum zum Führen eines durch den Medienspaltmotor zu fördernden Mediums, typischerweise eines Gases, insbesondere zugeführter Luft. In der Regel strömt durch den Strömungsraum ein Hauptmassestrom des Mediums in einer Hauptströmungsrichtung. Der Medienspaltmotor weist außerdem ein in dem Strömungsraum und auf der Welle angeordnetes Verdichterrad auf. Außerdem sind in dem Gehäuse Strömungskanäle zum Führen eines Teilmassestroms des Mediums vorgesehen. Die Strömungskanäle weisen jeweils einen Einlass vom Strömungsraum und einen Auslass zum Strömungsraum auf. Außerdem sind die Strömungskanäle an den Statorwicklungen vorbeigeführt, beispielsweise zum Wärmeaustausch zwischen den Statorwicklungen und den Strömungskanälen.

Der vorgeschlagene Medienspaltmotor ermöglicht eine Vergrößerung des Kennfeldes bei gleichzeitiger verbesserter Kühlung. Hierbei wird in der Regel durch die Strömungskanäle bei Erreichen einer Pumpgrenze ein unerwünschter Strömungsabriss am Verdichterrad verhindert und ein Teilmassestrom erzeugt, der dadurch, dass die Strömungskanäle an den Statorwicklungen vorbeigeführt werden, Wärme aufnimmt und abführt und somit den Stator kühlt.

In typischen Ausführungen sind die Strömungskanäle Rückströmkanäle. Die Rückströmkanäle können eingerichtet sein für eine Rückströmung des Teilmassestroms des Mediums. Die Rückströmung des Teilmassestroms erfolgt in der Regel im Wesentlichen entgegengesetzt zum Hauptmassestrom im Strömungsraum. Der vorgeschlagene Medienspaltmotor ermöglicht insbesondere durch eine Rezirkulation eine größere Haltbarkeit des Verdichterrads und durch den Wärmeaustausch ein verbessertes Wärmemanagement, sodass der Medienspaltmotor über ein größeres Kennfeld betrieben werden kann und langlebiger ist.

Die Anmeldung betrifft außerdem einen entsprechend vorteilhaften Verbrennungsmotor, der einen wie oben oder unten beschrieben ausgebildeten Medienspaltmotor umfasst.

Vorteilhafterweise sind die Strömungskanäle in den Stator integriert. Es kann typischerweise vorgesehen sein, dass die Statorwicklungen und die Strömungskanäle an einer gemeinsamen axialen Position angeordnet sind. Es kann beispielsweise vorgesehen sein, dass die Strömungskanäle jeweils zwischen benachbarten Statorwicklungen angeordnet sind. Beispielsweise sind die Strömungskanäle hierbei in Umfangsrichtung betrachtet auf direktem Wege zwischen den benachbarten Statorwicklungen angeordnet. Hierbei sind die Statorwicklungen und die Strömungskanäle in der Regel an einer gemeinsamen radialen Position, insbesondere an unterschiedlichen Positionen in Umfangsrichtung, angeordnet. Auf diese Weise kann durch die Integration der Strömungskanäle in den Stator ein besonders robuster und kompakter Aufbau erreicht werden, der zudem eine besonders effiziente Kühlung gewährleistet.

In typischen Ausführungen weist der Medienspaltmotor zumindest drei, insbesondere zumindest sechs, und/oder höchstens fünfzehn, insbesondere höchstens neun, Strömungskanäle auf. Auf diese Weise können die beschriebenen Vorteile besonders zuverlässig erreicht werden. Die Strömungskanäle sind in der Regel, insbesondere gleichmäßig, über einen Umfang verteilt und beispielsweise im Wesentlichen identisch ausgeführt hinsichtlich ihrer Form und Größe. In typischen Ausführungen entspricht eine Anzahl der Strömungskanäle einer Anzahl unterschiedlicher Pakete von Spulenwicklungen. Die Strömungskanäle sind in der Regel zwischen benachbarten Paketen von Spulenwicklungen angeordnet.

In typischen Ausführungen weist Stator Statorzähne und dazwischen angeordnete Statornuten auf. Die Strömungskanäle können in den Statornuten angeordnet sein. Somit kann eine besonders vorteilhafte Integration der Strömungskanäle bei kompaktem Aufbau und effizienter Kühlung des Stators erreicht werden. Insbesondere kann jeder der Strömungskanäle in einer zugehörigen Statornut aufgenommen sein. Es kann vorgesehen sein, dass pro Statornut nicht mehr als ein, insbesondere genau ein, Strömungskanal vorgesehen ist, der in der Statornut aufgenommen ist. Die Strömungskanäle sind in der Regel zumindest mit Bereichen der Strömungskanäle zwischen den Statorzähnen angeordnet. Es kann zudem vorteilhafterweise vorgesehen sein, dass die Statorwicklungen auf den Statorzähnen aufgenommen sind. Hierdurch kann ein besonders kompakter Aufbau erreicht werden, bei dem die Kühlung durch die Strömungskanäle besonders effizient wird. Die Statorwicklungen können einen zugehörigen Statorzahn umlaufen. In der Regel weist der Stator Wickelköpfe auf, die beispielsweise durch auf den Statorzähnen aufgenommenen Statorwicklungen gebildet sein können. Indem Strömungskanäle vorgesehen sind, die an den Wickelköpfen vorbeigeführt werden, kann in effizienter Weise die Vergrößerung des Kennfelds erreicht werden. In der Regel verlaufen die Strömungskanäle, beispielsweise mit, insbesondere nicht vernachlässigbaren, Abschnitten, parallel zu den Statornuten und/oder parallel zu den Längsseiten der Statorwicklungen. Auf diese Weise kann aufgrund einer vergrößerten Fläche für die Wärmeübertragung eine besonders effiziente Kühlung erreicht werden. In der Regel verlaufen die Strömungskanäle außerdem, beispielsweise mit, insbesondere nicht vernachlässigbaren, Abschnitten, parallel zu der Hauptströmungsrichtung im Strömungskanal und/oder parallel zu einer den Strömungsraum begrenzenden Wandung des Gehäuses.

Die Strömungskanäle, insbesondere jeder der Strömungskanäle, weisen in der Regel eine Querschnittsfläche auf, die geringer ist als eine Querschnittsfläche des Strömungsraums an entsprechender axialer Position. Insbesondere kann die Querschnittsfläche der Strömungskanäle, insbesondere jedes der Strömungskanäle, weniger als die Hälfte, insbesondere weniger als ein Fünftel, einer Querschnittsfläche des Strömungsraums an entsprechender axialer Position entsprechen. Der Teilmassestrom ist in der Regel geringer als der Hauptmassestrom und kann beispielsweise maximal halb so groß sein. In der Regel ist der Teilmassestrom die Summe der Masseströme durch die Strömungskanäle.

In typischen Ausführungen ist vorgesehen, dass die Strömungskanäle eine Querschnittsfläche aufweisen, die zumindest ein Viertel, insbesondere zumindest die Hälfte, einer Querschnittsfläche einer zugehörigen Statornut einnimmt. Die Querschnittsfläche der Statornut kann in einigen Ausführungen als die Fläche zwischen benachbarten Einheiten, die aus benachbarten Statorzähnen und den diese umgebenden Statorwicklungen gebildet werden, angesehen werden. Es kann vorgesehen sein, dass die Strömungskanäle eine Querschnittsfläche der zugehörigen Statornut nicht vollständig einnehmen, beispielsweise können die Strömungskanäle in einigen Ausführungen höchstens vier Fünftel der Querschnittsfläche der zugehörigen Statornut einnehmen.

Beispielsweise kann die Querschnittsfläche des Strömungskanals zwei Drittel der Querschnittsfläche der zugehörigen Statornut einnehmen. Auf diese Weise kann ein zur Verfügung stehende Platz für die Statorwicklungen und Strömungskanäle im Hinblick auf die durch den vorgeschlagenen Medienspaltmotor erreichten Wirkungen optimal ausgenutzt werden, indem einerseits gute elektrischen Eigenschaften (Widerstand, elektromotorische Kraft EMK, ...) und andererseits möglichst günstige strömungstechnischen Eigenschaften (Strömungsquerschnitt, Strömungsgeschwindigkeit, ...) bei vorteilhafter Verschiebung der Pumpgrenze erzielt werden. In einigen Ausführungen sind insbesondere abhängig vom Schluckvermögen des verwendeten Verbrennungsmotors auch Abweichungen von den genannten relativen Größenverhältnissen möglich.

In einigen Ausführungen ist vorgesehen, dass der Stator einen Jochring aufweist. Die Strömungskanäle können innerhalb des Jochrings verlaufen. Auf diese Weise kann eine besonders kompakte Anordnung mit effizientem Wärmeaustausch erreicht werden. Die Statorzähne können sich vom Jochring nach innen erstrecken. Die Statorzähne und der gegebenenfalls vorhandene Jochring können aus Elektroblechen, insbesondere aus einem Statorblechpaket mit Einzelblechen, gebildet sein. Der gegebenenfalls vorhandene Jochring kann mit den Statorzähnen als einstückiges (d.h. bezüglich der Einzelbleche durchgängiges) Statorblechpaket ausgebildet sein. Die Statorzähne können einen in Umfangsrichtung verbreiterten Abschnitt aufweisen. Der verbreiterte Abschnitt kann beispielsweise an einem inneren Ende des Statorzahns vorgesehen sein. Hierdurch ergibt sich ein besonders robuster und kompakter Aufbau, bei dem die Statorzähne das Magnetfeld zwischen den Strömungskanälen in Richtung des in der Welle aufgenommenen Rotormagneten führen. Die Statorzähne sind in der Regel aus einem magnetfeldleitenden Material gefertigt. Die Statorzähne können einen schmaleren Abschnitt aufweisen. Der schmalere Abschnitt ist typischerweise in radialer Richtung betrachtet hinter dem verbreiterten Abschnitt angeordnet und kann sich beispielsweise direkt an den verbreiterten Abschnitt anschließen. Die Statorwicklungen umlaufen in der Regel den schmaleren Abschnitt der Statorzähne. Es kann vorgesehen sein, dass die Strömungskanäle zwischen zwei schmaleren Abschnitten benachbarter Statorzähne angeordnet sind. Auf diese Weise kann eine kompakte und robuste Anordnung erreicht werden. Die Statorwicklungen sind typischerweise zwischen den verbreiterten Abschnitten und dem Jochring angeordnet.

In bevorzugten Ausführungsformen weist zumindest einer der Strömungskanäle, insbesondere jeder der Strömungskanäle, an zumindest einer axialen Position eine Querschnittsfläche von zumindest 225 mm² und/oder höchstens 3000 mm² auf. Hierdurch können die gewünschten Strömungs- und Kühleigenschaften in effizienter Weise erreicht werden. Die gesamte Querschnittsfläche wird in der Regel bei Erreichen der Pumpgrenze von dem Strömungsenden Medium durchströmt.

In einigen Ausführungsformen ist vorgesehen, dass die Strömungskanäle derart geformt sind, dass Querschnittsflächen der Strömungskanäle nach außen verbreitert sind. Auf diese Weise kann ein besonders kompakter Aufbau bei zuverlässiger Wärmeübertragung und hinreichend großem Strömungsquerschnitt erreicht werden. Beispielsweise können die Querschnittsflächen der Strömungskanäle im Wesentlichen keilförmig sein. In der Regel sind die Querschnittsflächen derart geformt, dass diese nach innen zusammenlaufen.

Es kann vorgesehen sein, dass die Strömungskanäle derart an den Statorwicklungen vorbeigeführt sind, dass ein Abstand zwischen den Statorwicklungen, beispielsweise einem elektrisch leitenden Abschnitt der Statorwicklungen, und den Strömungskanälen an zumindest einer Stelle höchstens 3 mm, insbesondere höchstens 1 mm, insbesondere höchstens 0,3 mm, beträgt. Auf diese Weise kann bei kompaktem Aufbau eine zuverlässige Wärmeübertragung von den Statorwicklungen auf den Teilmassestrom erreicht werden. Zwischen einem Strömungskanal und einer benachbarten Statorwicklung ist in der Regel eine Wärmeübertragungsfläche ausgebildet, über die der Wärmeaustausch stattfindet. Die Wärmeübertragungsfläche weist typischerweise über eine Fläche von mindestens 1000 mm², insbesondere mindestens 3900 mm², einen Abstand zwischen Statorwicklungen und Strömungskanälen auf, der höchstens den oben genannten Abstandswerten entspricht. Somit kann eine hinreichend große Fläche für einen besonders effizienten Wärmeaustausch bereitgestellt werden.

In einigen Ausführungsformen ist vorgesehen, dass die Strömungskanäle Kunststoffwandungen aufweisen. Es kann vorgesehen sein, dass die Strömungskanäle durch die Kunststoffwandungen von den Statorwicklungen getrennt sind. Auf diese Weise kann eine robuste und gut herstell- bzw. verarbeitbare Ausführungsform erreicht werden, die zugleich eine effiziente Wärmeübertragung gewährleistet. Es kann beispielsweise vorgesehen sein, dass die Strömungskanäle aus einem Kunststoffvergussmaterial gebildet sind. Auf diese Weise kann eine effiziente Wärmeübertragung bei robustem Aufbau und guter Herstellbarkeit erreicht werden. Es kann beispielsweise vorgesehen sein, dass das Kunststoffmaterial ein duroplastisches Vergussmaterial ist. Das duroplastische Material kann zum Beispiel ein gefülltes Zwei-Komponenten-Epoxidharz, insbesondere der thermischen Klasse H, sein. Es kann aber auch vorgesehen sein, dass das Kunststoffmaterial ein, beispielsweise glasfasergefülltes, warmformes Thermoplast, wie z.B. PPS-GF30, ist. Es kann vorgesehen sein, dass die Strömungskanäle als Teil einer Motorkartusche gemeinsam mit dieser gefertigt sind. Das Kunststoffvergussmaterial kann beispielswiese spritzgegossen sein. Eine Form und Größe der Strömungskanäle kann während der Herstellung aus dem Kunststoffvergussmaterial durch eine mehrteilige Gussform erzeugt werden.

In einigen Ausführungen sind die Statorwicklungen in das Kunststoffvergussmaterial eingebettet. Auf diese Weise kann das Kunststoffvergussmaterial ggfs. zur Begrenzung der Strömungskanäle und gleichzeitig zum Schutz der Statorwicklungen (z.B. vor Korrosion oder Erosion) beitragen. Zu diesem Zweck kann es vorgesehen sein, dass das Kunststoffvergussmaterial die Statorwicklungen mit einer Schichtdicke von zumindest 1 mm überdeckt, um einen Medienangriff auf die Statorwicklungen durch den Teilmassestrom zu vermeiden. Es kann zudem vorgesehen sein, dass die Statorzähne in das Kunststoffvergussmaterial eingebettet sind. Insbesondere kann es vorgesehen sein, dass die Statorwicklungen an einem inneren Ende, insbesondere mit ihrem verbreiterten Abschnitt, vollständig von dem Kunststoffvergussmaterial bedeckt sind. Hierdurch ergibt sich ein besonders langlebiger Aufbau mit guten Wärmeübertragungseigenschaften.

Es kann zudem vorgesehen sein, dass das Kunststoffvergussmaterial eine Wandung des Strömungsraums ausbildet. Somit kann das Kunststoffvergussmaterial in einigen Ausführungen sowohl die Strömungskanäle, als auch den Strömungsraum begrenzen. Hierdurch ergibt sich ein robuster Aufbau bei einem vereinfachten Herstellungsverfahren.

In einigen Ausführungsformen sind die Auslässe der Strömungskanäle in Bezug auf die Hauptströmungsrichtung im Strömungsraum stromaufwärts von dem Rotormagneten angeordnet. Auf diese Weise kann insbesondere eine effiziente Rückströmung bei effizienter Wärmeübertragung erreicht werden. Beispielsweise können sich die Strömungskanäle in einigen Ausführungen in axialer Richtung gesehen über eine gesamte Länge der Statorwicklungen erstrecken. Die Auslässe der Strömungskanäle in den Strömungsraum können in Bezug auf die Hauptströmungsrichtung im Strömungskanal stromaufwärts von der Welle angeordnet sein, damit eine effiziente Kühlung erreicht werden kann.

In der Regel sind die Strömungskanäle bis auf die zugehörigen Einlässe und Auslässe vom Strömungsraum getrennt, insbesondere durch einen Abschnitt des Gehäuses. Es kann vorgesehen sein, dass der Teilmassestrom durch die Strömungskanäle zumindest abschnittsweise, insbesondere über mehr als die Hälfte der Längen der Strömungskanäle, parallel zu einer Hauptströmungsrichtung im Strömungsraum geführt wird.

In typischen Ausführungen sind die Einlässe der Strömungskanäle in Bezug auf eine Hauptströmungsrichtung im Strömungsraum stromabwärts von dem Rotormagneten angeordnet. Auf diese Weise können die Strömungs- und Wärmeübertragungseigenschaften weiter verbesserte werden. Die Einlässe können, insbesondere wenn die Strömungskanäle als Rückströmkanäle ausgeführt sind, zumindest bereichsweise an einer gleichen axialen Position wie die Welle angeordnet sein. Beispielsweise können die Einlässe der Strömungskanäle in Bezug auf die Hauptströmungsrichtung im Strömungsraum stromaufwärts von dem Verdichterrad oder auf Höhe des Verdichterrads angeordnet sein. Somit kann eine effiziente Führung des Teilmassestroms gewährleistet werden.

In besonders bevorzugten Ausführungen können, beispielsweise um sich die durch das Verdichterrad hervorgerufene Verteilung der Strömungsrichtungen zunutze zu machen, die Einlässe oder die Auslässe so angeordnet sein, dass sie einen axialen Überlapp mit dem Verdichterrad aufweisen.

In bevorzugten Ausführungsformen ist vorgesehen, dass die Einlässe der Strömungskanäle Einlasskanäle ausbilden. Die Einlasskanäle können angeschrägt ausgeformt sein. Die Einlasskanäle können so angeschrägt ausgeformt sein, dass durch die Einlasskanäle strömendes Medium eine Strömungsrichtungskomponente aufweist, die der Hauptströmungsrichtung entgegengesetzt ist. Zusätzlich weist in der Regel durch die Einlasskanäle strömendes Medium eine Strömungsrichtungskomponente radial nach außen auf. Auf diese Weise können strömungstechnische Vorteile erreicht werden, wenn das beispielsweise rückströmende Medium vom Strömungskanal, und insbesondere von dem Verdichterrad, weggeführt wird. Es kann darüber hinaus vorgesehen sein, dass die Auslässe der Strömungskanäle Auslasskanäle ausbilden. Die Auslasskanäle können angeschrägt ausgeformt sein. Beispielsweise können die Auslasskanäle so angeschrägt ausgeformt sein, dass durch die Auslasskanäle strömendes Medium eine Strömungsrichtungskomponente in der Hauptströmungsrichtung aufweist. Zusätzlich weist in der Regel durch die Auslasskanäle strömendes Medium eine Strömungsrichtungskomponente radial nach innen auf. Eine solche Ausführung ist strömungstechnisch günstig, weil das durch den Strömungskanal geführte Medium bereits zur Hauptströmungsrichtung hingeführt wird, sodass Verwirbelungen vermieden werden. Es kann zudem vorgesehen sein, dass die Einlass- und/oder Auslasskanäle, insbesondere in einem Schnitt entlang der axialen Richtung, gegenüber den Strömungskanälen und dem Strömungsraum eine Schmalstelle ausbilden, wodurch ein Einfluss der Strömungskanäle auf den Hauptmassestrom im Strömungskanal minimiert werden kann.

In bevorzugten Ausführungen sind die Einlässe im Wesentlichen auf derselben radialen Position angeordnet wie die Auslässe. Beispielsweise können die Einlass- und Auslasskanäle einen radialen Überlapp aufweisen. Typischerweise ist zwischen den Einlässen und den Auslässen eine Wandung des Strömungsraums angeordnet. Die Wandung kann zwischen den Einlässen und Auslässen in axialer Richtung verlaufen. Insbesondere kann die Wandung zwischen den Einlässen und Auslässen stufenfrei und/oder ohne Öffnungen ausgeführt sein.

Der Medienspaltmotor kann als Bestandteil eines Turboladers ausgeführt sein. Beispielsweise kann der Turbolader ein Turbinenrad aufweisen. Das Turbinenrad kann über die Welle mit dem Verdichterrad gekoppelt sein. Beispielsweise kann das Turbinenrad drehfest mit dem Verdichterrad verbunden sein. Das Turbinenrad kann auf der Welle aufgenommen sein. Das Turbinenrad kann mit einem Abgasstrom aus einem Brennraum so zusammenwirken, dass der Abgasstrom das Turbinenrad antreibt. Das Verdichterrad kann eingerichtet sein, dem Brennraum zuzuführende Frischluft zu verdichten.

Ausführungsbeispiele werden nachfolgend anhand der Abbildungen beschrieben. Es zeigen
- Fig. 1: eine Ansicht eines Turboladers,
- Fig. 2: eine Schnittansicht eines Verdichtergehäuses des Turboladers,
- Fig. 3: eine Querschnittsansicht des Verdichtergehäuses,
- Fig. 4: eine weitere Schnittansicht des Verdichtergehäuses und
- Fig. 5: eine Schnittansicht eines Verdichtergehäuses gemäß einer weiteren Ausführungsform.

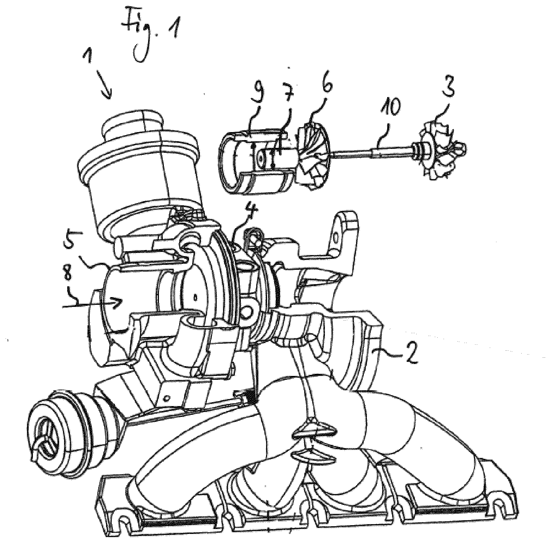

Figur 1 zeigt in einer Teilexplosionszeichnung einen elektrisch modifizierten mechanischen Turbolader 1, der mit einem Turbinengehäuse 2 an einen Verbrennungsmotor ankoppelbar ist. Die vorliegende Anmeldung bezieht sich auf einen Medienspaltmotor, der beispielsweise als Bestandteil des Turboladers 1 ausgeführt ist. Es kommen aber auch andere vorteilhafte Verwendungsmöglichkeiten für den Medienspaltmotor in Betracht. Durch den in der Abbildung gezeigten Abgaskrümmer wird nach der Verbrennung das Abgas gesammelt und zum Antrieb eines Turbinenrades 3 genutzt. Das Turbinenrad 3 ist vom Turbinengehäuse 2 umgeben und ist im Wesentlichen einem herkömmlichen mechanischen Turbolader entnommen. An das Turbinengehäuse 2 schließt sich ein Lagergehäuse 4 und sodann ein Verdichtergehäuse 5 an. In diesem Verdichtergehäuse 5 ist ein Verdichterrad 6 angeordnet, das durch eine Einlassöffnung zugeführte Luft verdichtet. Die Luft wird anschließend zu dem Brennraum des Verbrennungsmotors geführt. Das Verdichterrad 6 zeigt in dem dargestellten Beispiel linksseitig einen Fortsatz, an dem ein Rotor 7 eines Elektromotors angeordnet ist. Der Rotor 7 ist hierbei frei auskragend ausgeführt, d.h., der Rotor 7 ist nicht gesondert gelagert. Der Rotor 7 ist bei fertig montiertem Turbolader 1 zentral in der Einlassluftöffnung angebracht. Die Lufteinlassströmungsrichtung ist in der Abbildung mit einem Pfeil mit Bezugszeichen 8 gekennzeichnet.

Um den Rotor 7 herum ist ein Stator 9 vorgesehen, der in der Abbildung lediglich schematisch dargestellt ist und im Wesentlichen eine hohlzylindrische Form aufweist. Ein zwischen Rotor 7 und Stator 9 ausgebildeter Rotorspalt bildet einen Strömungsraum für einen Hauptmassestrom und gleichzeitig eine Einlassluftöffnung für das Verdichterrad 6. Der Hauptmassestrom strömt im Verdichtergehäuse 5 im Wesentlichen in einer Hauptströmungsrichtung, welche der Lufteinlassströmungsrichtung 8 entspricht.

Das Verdichterrad 6 kann (muss aber nicht) aus einem nichtmetallischen Material sein, bei einer Ausführung beispielsweise aus einem unverstärkten Kunststoff ist die Beeinflussung des elektromagnetischen Feldes des Elektromotors minimiert. Der Rotormagnet wiederum ist aufgenommen auf oder in einer Welle 10, an oder auf der das Verdichterrad 6 sowie das Turbinenrad 3 aufgenommen sind. Die Welle 10 ist in der vorliegenden Ausführungsform so ausgeführt, dass Turbinenrad 3, Verdichterrad 6 sowie Rotor 7 drehfest miteinander verbunden sind.

Die Sollspannung des Elektromotors beträgt beispielsweise 12 V, es sind allerdings auch andere Spannungen (beispielsweise 48 V bis 800 V für Hybridfahrzeuge) möglich. Der Elektromotor ist sowohl im Motorbetrieb (zur Beschleunigung und Vermeidung eines Turbolochs) als auch im Generatorbetrieb (zur Rückgewinnung von Energie) betreibbar. Erreicht der Ladedruck (im Turbinengehäuse 2) einen bestimmten Sollwert, wird unter Verwendung eines rückspeisefähigen Umrichters zusätzliche elektrische Energie erzeugt. Der Elektromotor des Turboladers 1 ist hierbei mit einem Speicher für elektrische Energie verbunden zur Entnahme elektrischer Energie in einem Motorbetrieb des Turboladers 1 und zur Einspeisung elektrischer Energie bei einem Genera-torbetrieb des Turboladers 1. Zur effizienten Steuerung des Antriebssystems bzw. des Turboladers 1 ist eine Steuerelektronik zur Ermittlung der Drehzahl von Turbinenrad 3 oder Verdichterrad 6, Ist-Werten von turbinengehäuseseitigen und verdichtergehäuseseitigen Druckverhältnissen sowie weiteren für den Verbrennungsmotor drehmomentrelevanten Werten vorgesehen.

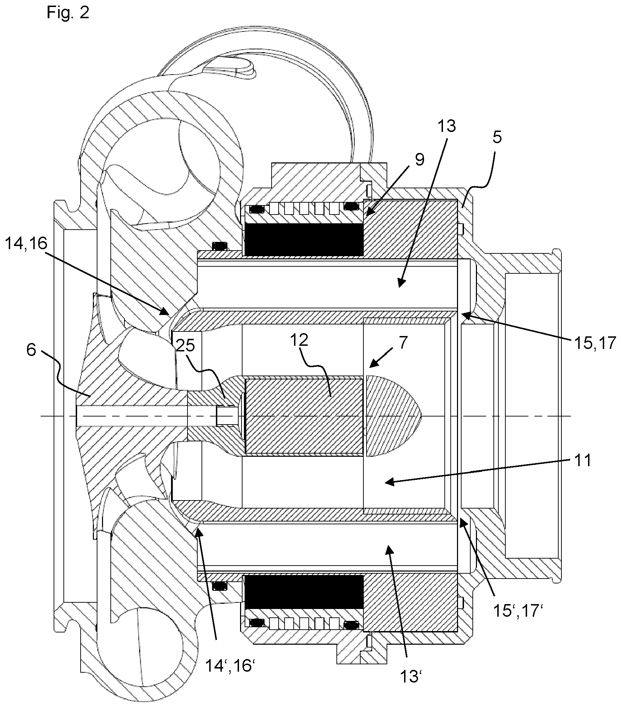

Figur 2 zeigt eine Schnittansicht durch das Verdichtergehäuse 5 des Turboladers 1. Wiederkehrende Merkmale sind in dieser und in der folgenden Abbildung mit den gleichen Bezugszeichen versehen. Mittig in dem von dem Stator begrenzten Strömungsraum 11 ist der Rotor 7 angeordnet. In dem Strömungsraum 11 wird ein Hauptmassestrom in Richtung des ebenfalls im Strömungsraum 11 angeordneten Verdichterrads 6 (in der Abbildung nach links) geführt. Der Rotor 7 weist einen Rotormagneten 12 auf, der von einer Armierung 25 umgeben ist. Das Verdichterrad 6 ist drehfest mit der Welle 10 verbunden. Die Armierung 25 sowie der Rotor 7 können als Teil der Welle 10, die nicht notwendigerweise einstückig ausgeführt sein muss, aufgefasst werden. In das Verdichtergehäuse 5 ist der Stator 9 integriert. In dem Verdichtergehäuse 5 sind zudem Strömungskanäle 13, 13' vorgesehen. Die Strömungskanäle sind in einigen Ausführungen als Rückströmkanäle 13, 13' ausgeführt. Durch diese kann eine Rückströmung eines Teilmassestroms entgegen der Hauptströmungsrichtung geführt werden. Die Strömungskanäle 13, 13' durchlaufen den Stator 9 und verlaufen im Wesentlichen in axialer Richtung. Die Strömungskanäle 13, 13' sind an Statorwicklungen des Stators 9 vorbeigeführt, sodass die Statorwicklungen in wärmeübertragender Verbindung mit den Strömungskanälen 13, 13' stehen. Die Strömungskanäle 13, 13' erstrecken sich über eine gesamte axiale Länge der Statorwicklungen.

Die Strömungskanäle 13, 13' sind jeweils über einen Einlass 14, 14' und einen Auslass 15, 15' mit dem Strömungsraum 11 fluidisch verbunden. Die Einlässe 14, 14' sind auf Höhe des Verdichterrads 6 angeordnet, weisen also einen axialen Überlapp mit dem Verdichterrad 6 auf. Die Auslässe 15, 15' sind in Bezug auf die Hauptströmungsrichtung im Strömungsraum 11 stromaufwärts von den Einlässen 14, 14' (d.h. in der Abbildung rechts davon) angeordnet. Die Auslässe 15, 15' sind darüber hinaus stromaufwärts von dem Rotormagneten 12 und einem stromaufwärtsseitigen Ende der Welle 10, die beispielsweise durch eine Kappe der Armierung 25 gebildet sein kann, angeordnet. Die Einlässe 14, 14' bilden zudem verengte Einlasskanäle 16, 16' aus, durch die das beispielsweise rückströmende Medium aus dem Strömungsraum 11 radial nach außen und zugleich mit axialer Komponente entgegen der Hauptströmungsrichtung (d.h. in der Abbildung mit Komponente nach rechts) strömt. Außerdem bilden die Auslässe 15, 15' verengte Auslasskanäle 17, 17' aus, durch die das rückströmende Medium zurück in den Strömungsraum 11 strömt. Die Auslasskanäle 17, 17' sind so geformt, dass das Medium darin radial nach innen und zugleich mit einer Komponente in der Hauptströmungsrichtung (d.h. in der Abbildung mit Komponente nach links) strömt.

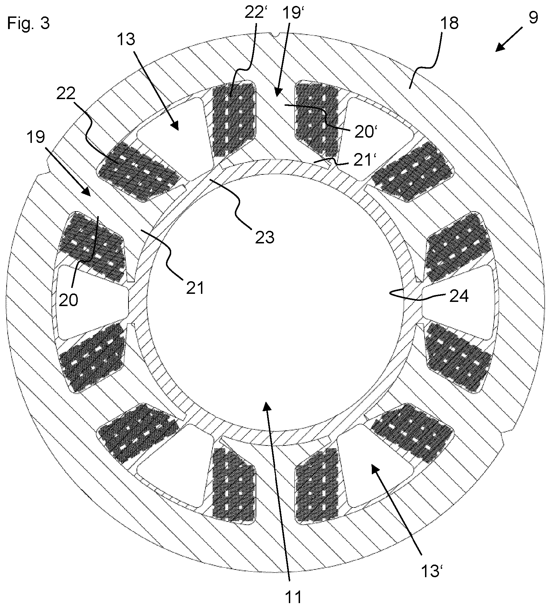

Figur 3 zeigt eine weitere Schnittansicht, die einen Aufbau des Stators 9 genauer illustriert. Gleichmäßig über den Umfang verteilt sind insgesamt sechs Strömungskanäle, von denen zwei mit den Bezugszeichen 13 und 13' gekennzeichnet sind, vorgesehen. Die Strömungskanäle 13, 13' entsprechen sich in ihrer Form und Größe und sind keilförmig ausgebildet, derart dass sich ihre Querschnitte radial nach innen stetig verjüngen. Der Stator 9 weist außerdem einen Jochring 18 auf, von dem sich sechs gleichmäßig über den Umfang verteilte Statorzähne, von denen zwei mit den Bezugszeichen 19 und 19' gekennzeichnet sind, nach innen erstrecken. Der Jochring 18 und die Statorzähne 19, 19' sind gemeinsam aus einem Statorblechpaket geformt. Die Statorzähne 19, 19' sind in axialer Richtung länglich ausgeführt und weisen jeweils einen auf eine Umfangsrichtung bezogen schmaleren Abschnitt 20, 20' und einen auf die Umfangsrichtung bezogen verbreiterten Abschnitt 21, 21' auf. Der verbreiterte Abschnitt 21, 21' bildet ein radial innen liegendes Ende des Statorzahns 19, 19' und der schmalere Abschnitt 20, 20' ist zwischen dem verbreiterten Abschnitt 21, 21' und dem Jochring 18 angeordnet.

Der Stator 9 weist zudem die Statorwicklungen auf, von denen zwei mit den Bezugszeichen 22 und 22' gekennzeichnet sind. Die Statorwicklungen 22, 22' sind auf den schmaleren Abschnitten 20, 20' der Statorzähne 19, 19' aufgenommen und umlaufen diese. Die Statorwicklungen 22, 22' sind in die durch die schmaleren Abschnitte 20, 20' der Statorzähne 19, 19' gebildeten Vertiefungen eingebettet. Zwischen den Statorzähnen 19, 19' einschließlich der diese umgebenden Statorwicklungen 22, 22' sind Statornuten ausgebildet, in denen die Strömungskanäle 13, 13' angeordnet sind. Die Strömungskanäle 13, 13' füllen mehr als die Hälfte einer Querschnittsfläche der zugehörigen Statornut aus. Die Strömungskanäle 13, 13' sind zwischen benachbarten Statorzähnen 19, 19' angeordnet und zwar zwischen deren schmaleren Abschnitten 20, 20'. Zudem sind die Strömungskanäle 13, 13' zwischen benachbarten Statorwicklungen 22, 22' angeordnet. Damit ergibt sich, dass die Statorwicklungen 22, 22' und die Strömungskanäle 13, 13' an einer gemeinsamen radialen Position, d.h. zumindest bereichsweise mit gleichem Abstand zur Drehachse des Rotors 7, angeordnet sind.

Die Statorzähne 19, 19' und die Statorwicklungen 22, 22' sind gemeinsam in ein einstückiges und nicht gefügtes Kunststoffvergussmaterial 23 eingebettet. Das Kunststoffvergussmaterial 23 bedeckt die radial innen liegenden Enden der Statorzähne 19, 19' vollständig. Das Kunststoffvergussmaterial 23 bildet zudem eine zylindrische innere Wandung 24 des Stators 9 aus, die den Strömungsraum 11 begrenzt. Die Strömungskanäle 13, 13' sind ebenfalls aus dem Kunststoffvergussmaterial 23 ausgeformt. Zwischen jeder der Statorwicklungen 22, 22' und dem benachbarten Strömungskanal 13, 13' ist lediglich das Kunststoffvergussmaterial 23 angeordnet und bildet dort eine dünne wärmeübertragende Schicht aus, die zugleich geeignet sein kann eine Korrosion der Statorwicklungen 22, 22' zu verhindern.

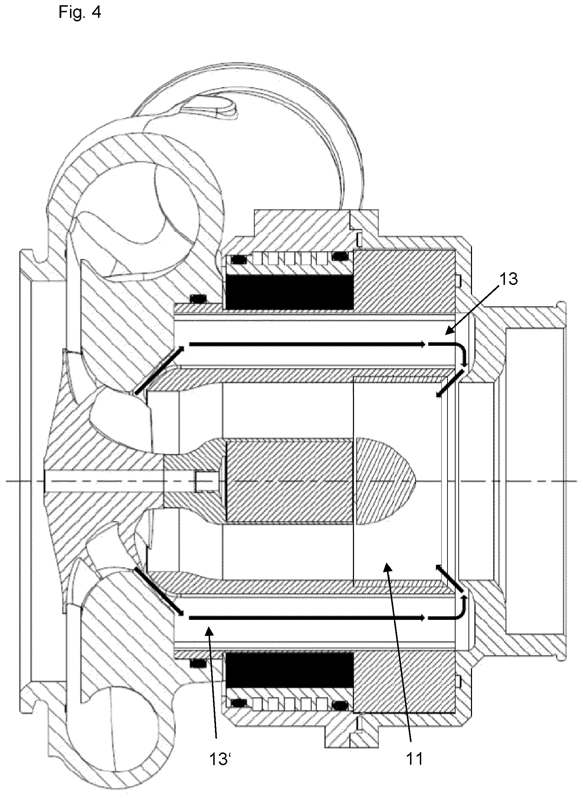

Figur 4 illustriert mögliche Strömungspfade (siehe Pfeile) des Teilmassestroms. Während die Hauptströmungsrichtung im Strömungsraum 11 in der Darstellung nach links verläuft, wird der Teilmassestrom in den Strömungskanälen 13, 13', die in dieser Ausführung als Rückströmkanäle ausgebildet sind, im Wesentlichen entgegengesetzt geführt.

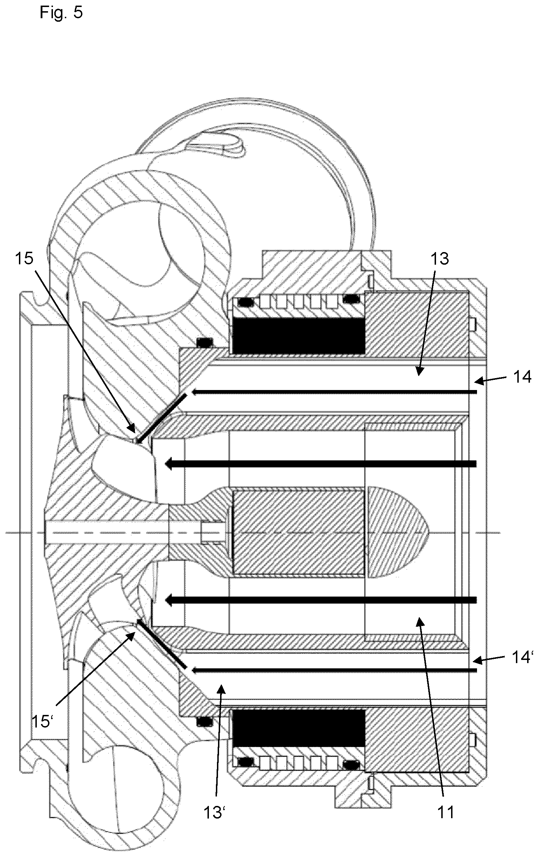

Figur 5 illustriert eine weitere Ausführungsform, die einzelne oder sämtliche der oben in Bezug auf die andere Ausführungsform beschriebene Merkmale in entsprechender Weise aufweist. Allerdings wird bei der weiteren Ausführungsform nach Fig. 5 der Teilmassestrom in den Strömungskanälen 13, 13' im Wesentlichen in der Hauptströmungsrichtung (d.h. in der Darstellung nach links) geführt. Die Einlässe 14, 14' sind zu diesem Zweck derart ausgebildet, dass der Teilmassestrom in axialer Richtung vom Strömungsraum 11 in die Strömungskanäle 13, 13' einströmen kann. In dieser Ausführungsform sind die Einlässe 14, 14' an einer radial weiter außen liegenden Stellen angeordnet als die Auslässe 15, 15'.

Lediglich in den Ausführungsbeispielen offenbarte Merkmale der verschiedenen Ausführungsformen können miteinander kombiniert und einzeln beansprucht werden.

## Patentansprüche

1. Medienspaltmotor, beispielsweise für einen Turbolader (1), mit einer Welle (10), in oder auf der ein Rotormagnet (12) aufgenommen ist,
einem Stator (9) mit Statorwicklungen (22, 22') zum elektrischen Antreiben einer Drehung der Welle (10),
einem Gehäuse, das einen zwischen dem Rotor und dem Stator (9) angeordneten Strömungsraum (11) begrenzt, und
einem in dem Strömungsraum (11) und auf der Welle (10) angeordneten Verdichterrad (6),
**dadurch gekennzeichnet, dass**
in dem Gehäuse Strömungskanäle (13, 13') zum Führen eines Teilmassestroms eines Mediums vorgesehen sind,
wobei die Strömungskanäle (13, 13') jeweils einen Einlass (14, 14') vom Strömungsraum (11) und einen Auslass (15, 15') zum Strömungsraum (11) aufweisen,
wobei die Strömungskanäle (13, 13') an den Statorwicklungen (22, 22') vorbeigeführt sind zum Wärmeaustausch zwischen den Statorwicklungen (22, 22') und den Strömungskanälen (13, 13').

2. Medienspaltmotor nach Anspruch 1, **dadurch gekennzeichnet, dass** die Strömungskanäle Rückströmkanäle (13, 13') sind, die eingerichtet sind für eine Rückströmung des Teilmassestroms des Mediums.

3. Medienspaltmotor nach einem der Ansprüche 1 oder 2, **dadurch gekennzeichnet, dass** die Strömungskanäle (13, 13') jeweils zwischen benachbarten Statorwicklungen (22, 22') angeordnet sind.

4. Medienspaltmotor nach einem der Ansprüche 1 bis 3, **dadurch gekennzeichnet, dass** der Stator (9) Statorzähne (19, 19') und dazwischen angeordnete Statornuten aufweist, wobei die Strömungskanäle (13, 13') in den Statornuten angeordnet sind.

5. Medienspaltmotor nach Anspruch 4, **dadurch gekennzeichnet, dass** die Strömungskanäle (13, 13') eine Querschnittsfläche aufweisen, die zumindest ein Viertel einer Querschnittsfläche einer zugehörigen Statornut einnimmt.

6. Medienspaltmotor nach einem der Ansprüche 1 bis 5, **dadurch gekennzeichnet, dass** der Stator (9) einen Jochring (18) aufweist, wobei die Strömungskanäle (13, 13') innerhalb des Jochrings (18) verlaufen.

7. Medienspaltmotor nach einem der Ansprüche 1 bis 6, **dadurch gekennzeichnet, dass** die Strömungskanäle (13, 13') derart geformt sind, dass Querschnittsflächen der Strömungskanäle (13, 13') nach außen verbreitert sind.

8. Medienspaltmotor nach einem der Ansprüche 1 bis 7, **dadurch gekennzeichnet, dass** die Strömungskanäle (13, 13') derart an den Statorwicklungen (22, 22') vorbeigeführt sind, dass ein Abstand zwischen den Statorwicklungen (22, 22') und den Strömungskanälen (13, 13') an zumindest einer Stelle höchstens 3 mm beträgt.

9. Medienspaltmotor nach einem der Ansprüche 1 bis 8, **dadurch gekennzeichnet, dass** die Strömungskanäle (13, 13') aus einem Kunststoffvergussmaterial (23) gebildet sind.

10. Medienspaltmotor nach einem der Ansprüche 1 bis 9, **dadurch gekennzeichnet, dass** die Auslässe (15, 15') der Strömungskanäle (13, 13') in Bezug auf eine Hauptströmungsrichtung im Strömungsraum (11) stromaufwärts von dem Rotormagneten (12) angeordnet sind.

11. Medienspaltmotor nach einem der Ansprüche 1 bis 10, **dadurch gekennzeichnet, dass** die Einlässe (14, 14') der Strömungskanäle (13, 13') in Bezug auf eine Hauptströmungsrichtung im Strömungsraum (11) stromabwärts von dem Rotormagneten (12) angeordnet sind.

12. Medienspaltmotor nach einem der Ansprüche 1 bis 11, **dadurch gekennzeichnet, dass** die Einlässe (14, 14') der Strömungskanäle (13, 13') in Bezug auf eine Hauptströmungsrichtung im Strömungsraum (11) stromaufwärts von dem Verdichterrad (6) oder auf Höhe des Verdichterrads (6) angeordnet sind.

13. Medienspaltmotor nach einem der Ansprüche 1 bis 12, **dadurch gekennzeichnet, dass** die Einlässe (14, 14') der Strömungskanäle (13, 13') Einlasskanäle (16, 16') ausbilden, die so angeschrägt ausgeformt sind, dass durch die Einlasskanäle (16, 16') strömendes Medium eine Strömungsrichtungskomponente aufweist, die der Hauptströmungsrichtung entgegengesetzt ist.

14. Medienspaltmotor nach einem der Ansprüche 1 bis 13, **dadurch gekennzeichnet, dass** die Auslässe (15, 15') der Strömungskanäle (13, 13') Auslasskanäle (17, 17') ausbilden, die so angeschrägt ausgeformt sind, dass durch die Auslasskanäle (17, 17') strömendes Medium eine Strömungsrichtungskomponente in der Hauptströmungsrichtung aufweist.

15. Verbrennungsmotor, umfassend einen Medienspaltmotor nach einem der vorherigen Ansprüche.
